# EUROPÄISCHE PATENTANMELDUNG

(11) **EP 0 961 069 A1**
(43) Veröffentlichungstag der Anmeldung: **01.12.1999**
(21) Anmeldenummer: 99201639.4
(22) Anmeldetag: 25.05.1999
(51) Int. Cl.: F16L 3/10, F16L 55/033

(54) **Rohrschelle**

(30) Priorität: 28.05.1998 NL 1009276
(71) Anmelder: J. van Walraven B.V., NL-3641 RK Mijdrecht (NL)
(72) Erfinder: van Walraven, Jan, 3641 GP Mijdrecht (NL)
(74) Vertreter: Brookhuis, Hendrik Jan Arnold

(57) **Zusammenfassung**

Schelle zum Befestigen eines Rohres oder dergleichen an einer Wand, Decke oder einer anderen Unterstützung. Die Schelle hat einen ringförmigen Schellenkörper mit einer von seinem ersten und seinem zweiten freien Ende begrenzten öffnung, um den Schellenkörper um das Rohr zu legen. Weiter ist eine Verbindungseinheit zum lösbar Miteinanderverbinden der freien Enden vorgesehen, welche Verbindungseinheit bei dem ersten freien Ende des Schellenkörpers mit einer Befestigung des Schellenkörpers in solcher Weise verbunden ist, daß die Verbindungseinheit schwenkbar gegenüber dem Schellenköper ist.

Die Verbindungseinheit umfaßt einen auf das zweite freie Ende ausgerichteten Schaft, der in einem Abstand zu der Befestigung mit einem Greifelement, das die Schenkel eines an dem zweiten freien Ende angeordneten Auflageorgans hintergreifen kann, versehen ist.

Die Schenkel sind in der Nähe der Einführöffnung des Schlitzes über ein Stegteil miteinander verbunden, wobei das Stegteil eine an den Schlitz zwischen den Schenkeln anschließende Öffnung begrenzt, die ein zwischen dem Stegteil und den Schenkeln Passieren des Greifelements gestattet.

## Beschreibung

Die vorliegende Erfinding bezieht sich auf eine Schelle zum Befestigen eines Rohres, einer Leitung oder dergleichen an einer Wand, Decke oder einer anderen Unterstützung nach dem Oberbegriff des Anspruchs 1.

Aus EP 0 387 967, EP 0 512 654, DE 44 31 692 und EP 0 671 579 sind Schellen des in dem Oberbegriff beschriebenen Typs bekannt. Bei diesen bekannten Schellen ist der Schellenkörper mit einem Kupplungsorgan, oft einer Mutter, versehen, um den Schellenkörper an der Wand, der Decke oder einer anderen Unterstützung anordnen zu können. Bei diesen bekannten Schellen umfaßt die Verbindungseinheit einen Schraubenbolzen, der in ein zugehöriges Stützteil geschraubt worden ist. Das Stützteil ist dabei an dem ersten freien Ende des Schellenkörpers, zum Beispiel an dem dort angeordneten ersten Flansch des Schellenkörpers befestigt, oder stützt sich beim Zueinanderziehen der freien Enden an diesem ersten Flansch ab. Die Befestigung des Schraubenbolzens an dem ersten freien Ende des Schellenkörpers ist dabei in solcher Weise ausgeführt, daß der Schraubenbolzen gegenüber dem Schellenkörper zwischen dem Passierstand, in dem ein an dem zweiten freien Ende angeordneter zweiter Flansch den Kopf des Schraubenbolzens passieren kann, und dem Verbindungsstand, in dem der Schraubenbolzen im wesentlichen rechtwinklig auf den beiden Flanschen gerichtet ist, schwenken kann, und der Schaft des Bolzens in einem Schlitz in dem zweiten Flansch liegt, wobei der Kopf des Bolzens die Schenkel des zweiten Flansches hintergreift. Bei diesen bekannten Schellen ist die schwenkbare Befestigung federnd ausgeführt, so daß bei dem Zueinanderschwenken der Schellenteile, der zweite Flansch gegen den Kopf der Schraube stößt und dieser Schraube dadurch gegen eine Federkraft seitlich weggedrückt wird, wonach die Schraube unter Einfluß der Federkraft wieder zurückschwenkt, sobald der zweite Flansch den Kopf der Schraube passiert hat, und der Bolzenschaft in den zugehörigen Schlitz in dem zweiten Flansch gelangen kann. Dadurch, daß nun der Kopf des Bolzens die Schenkel des zweiten Flansches hintergreift, sind die beiden freien Enden des Schellenkörpers provisorisch miteinander verbunden. Anschließend werden der erste und der zweite Flansch zueinandergezogen, indem die Schraube angezogen wird.

Bei den obengenannten bekannten Schellen sind der Schellenkörper und die ab diesem gebogenen Flansche aus Metall hergestellt, es sind aber auch Schellen nach dem Oberbegriff des Anspruchs 1 bekannt, bei denen der Schellenkörper aus Kunststoff hergestellt ist.

Es hat sich herausgestellt, daß, wenn diese bekannten Schellen einer großen Belastung ausgesetzt werden, wie zum Beispiel bei einer Belastungsprobe, sich der Kopf des Schraubenbolzens verhältnismäßig leicht von dem zweiten Flansch löst, zum Beispiel, indem die Schenkel des Flansches in Längsrichtung des Schlitzes von unter dem Bolzenkopf weggezogen werden. Zugleich besteht bei diesen bekannten Schellen die Chance, daß - bei einer großen Belastung der Schelle - die Schenkel des Flansches, die von dem Kopf des Bolzens hintergriffen werden, auseinanderweichen werden, wodurch sich die Schelle öffnet.

Der vorliegenden Erfindung liegt die Aufgabe zugrunde, obengenannte Probleme in einfacher Weise aufzuheben.

Die vorliegende Erfindung schafft eine Schelle nach dem Oberbegriff des Anspruchs 1, die dadurch gekennzeichnet ist, daß die Schenkel des Auflageorgans in der Nähe der Einführöffnung des Schlitzes über ein Stegteil miteinander verbunden sind, wobei das Stegteil eine an den Schlitz zwischen den Schenkeln anschließende Öffnung begrenzt, die ein zwischen dem Stegteil und den Schenkeln Passieren des Greiforgans gestattet. Durch das Stegteil wird erreicht, daß die Schenkel in der Nähe des von der Einführöffnung gebildeten offenen Endes des Schlitzes miteinander verbunden sind. Hierdurch wird die Chance eines Auseinanderweichens der Schenkel - in solcher Weise, daß das Greiforgan zwischendurch paßt - erheblich geringer.

Vorzugsweise umfaßt das Stegteil einen Querkörper, der sich an der von dem ersten freien Ende abgekehrten Seite in einem Abstand zu den Schenkeln des Auflageorgans erstreckt. Dabei ist es vorteilhaft, wenn der Abstand zwischen dem Querkörper und der Fläche der Schenkel kleiner als die entsprechende Abmessung des Greiforgans ist, insbesondere in solcher Weise, daß, wenn bei einer geschlossenen Schelle die Schenkel die Neigung haben, von unter dem Greiforgan wegzuschieben, das Greiforgan gegen den Querkörper stößt und also die Verbindung zwischen den freien Einden erhalten bleibt.

Vorzugsweise ist die Verbindungseinheit so ausgeführt, daß der Abstand zwischen dem Greiforgan und der Befestigung verringert werden kann, um beide, durch die Verbindungseinheit miteinander verbundene freie Enden zueinanderzuziehen. In einer praktisch vorteilhaften Ausführung umfaßt die Verbindungsanordnung einen Schraubenbolzen und ein zugehöriges Stützteil, in das der Schraubenbolzen eingeschraubt worden ist, welches Stützteil über die Befestigung schwenkbar an dem ersten freien Ende des Schellenkörpers befestigt ist. Hierbei kann dann der Kopf der Schraube das Greiforgan bilden.

In einer bevorzugten Ausbildung der erfindungsgemäßen Schelle wird die Schwenkbewegung der Verbindungseinheit in den Verbindungsstand von Federkraft unterstützt, welche Federkraft zum Beispiel durch eine geeignete federnde Ausführung des Stützteils für das mit diesem verbundene Verbindungselement, wie einen Schraubenbolzen, erzielt wird.

In einer bevorzugten Ausführungsform weist der Schellenkörper einen ersten und einen zweiten Flansch, jeweils an dem ersten und dem zweiten freien Ende des Schellenkörpers auf, welche Flansche ab dem im wesentlichen kreisförmigen Schellenkörper herausragen. Durch eine Öffnung in dem ersten Flansch steckt zum Beispiel ein Schraubenbolzen, der an der von dem zweiten Flansch abgekehrten Seite des ersten Flansches mit einem Stützteil verbunden ist.

Der Schellenkörper der erfindungsgmäßen Schelle kann mit zwei separaten Schellenhälften ausgeführt sein, die an einer Seite über eine, vorzugsweise gelenkige, Verbindung miteinander verbunden sind und an der anderen Seite mit der erfindungsgemäßen Verbindung versehen sind. Die gelenkige Verbindung kann zum Beispiel aus einer geeigneten Hakenverbindung bestehen, jedoch könnte diese auch von einer Bolzenverbindung gebildet werden. Auch können die Schellenhälften an beiden Seiten mit der erfindungsgemäßen Verbindung versehen sein. In wieder einer anderen Variante besteht der Schellenkörper aus einem einzigen Streifen mit einer solchen Festigkeit, daß es möglich ist, den Körper zu verbiegen, um die freien Enden zueinander zu bewegen.

Gegebenenfalls ist in dem Schellenkörper eine elastische Einlage vorhanden, zum Beispiel aus Gummi oder Kunststoff, die sich zwischen den Schellenkörper und das Rohr legt.

Der Erfindungsgedanke kann in einfacher Weise realisiert werden, wie sich aus der nachfolgenden Beschreibung von in der Zeichnung gezeigten Ausführungsbeispielen herrausstellen wird. Die Zeichnung zeigt in:
- Fig. 1: eine schematische perspektivische Ansicht einer erfindungsgemäßen Schelle;
- Fig. 2a: einen Teil der Schelle gemäß Fig. 1 in größerem Maßstab,
- Fig. 2b: einen Teil des Schraubenbolzens, und
- Fig. 3: eine Variante der Schelle der Figur 1 in einer Ansicht gemäß Figur 2a.

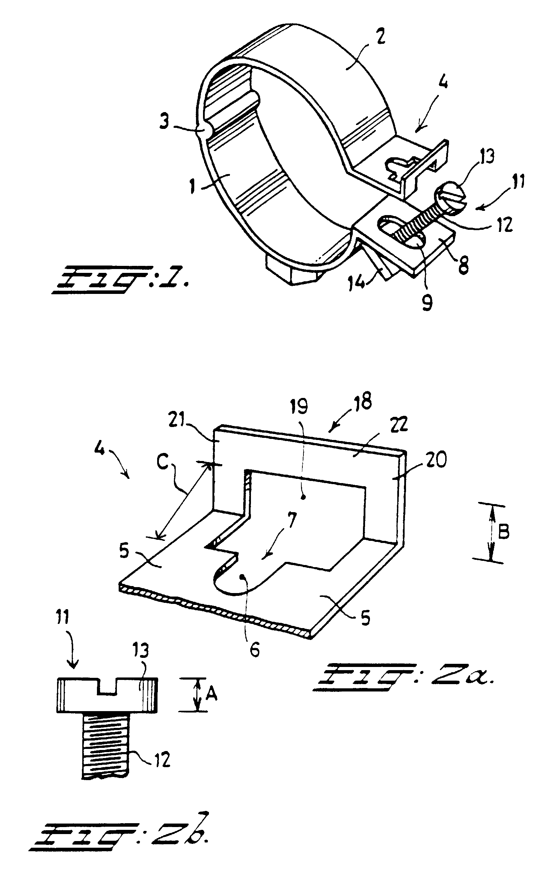

In Figur 1 hat eine Schelle zum Befestigen eines Rohres, einer Leitung oder dergleichen an einer Wand oder einer Decke eines Gebäudes oder an einer anderen Unterstützung, einen ringförmigen Schellenkörper, der hier aus zwei metallenen Schellenteilen 1 und 2 zusammengesetzt ist, jeweils als erstes und zweites Schellenteil bezeichnet, die an einer Seite über schematisch angegebene Gelenkmittel 3 miteinander verbunden sind. Die Gelenkmittel 3 können in vielerlei bekannten Weisen ausgeführt sein und zum Beispiel aus einer gelenkigen Hakenverbindung zwischen beiden Schellenteilen 1, 2 bestehen. Die Gelenkmittel 3 können auch aus einem an jedem Schellenteil angeformten Flansch bestehen, die durch einen Bolzen in solcher Weise miteinander verbunden sind, daß sich die beiden Schellenteile zueinander um ein Scharnier drehen können.

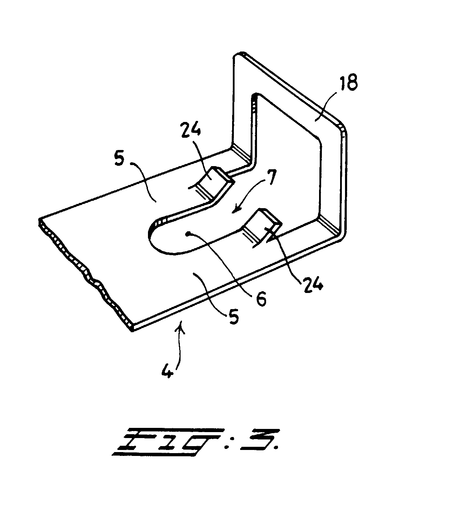

An dem von den Gelenkmitteln 3 abgewandten zweiten freien Ende hat das zweite Schellenteil 2 einen nach außen gebogenen zweiten metallenen Flansch 4, der in Fig. 2 im Detail gezeigt ist. Der Flansch 4 hat zwei Schenkel 5, die zwischen ihnen einen Schlitz 6 mit einer Einführöffnung 7 an einer von dem ringförmigen Teil des Schellenkörpers abgekehrten Seite des Schlitzes 6 begrenzen.

An dem von den Gelenkmitteln 3 abgewandten ersten freien Ende des Schellenteils 1 ist ein erster Flansch 8 nach außen gebogen.

Zum Verbinden des zweiten Flansches 4 und des ersten Flansches 8 ist hier ein Schraubenbolzen 11 vorgesehen, mit dem die Flansche 4, 8 miteinander verbunden und zueinander gezogen werden können, so daß in der geschlossenen Lage der Schelle die Flansche 4, 8 dicht nebeneinander liegen.

In dem ersten Flansch 8 ist eine Öffnung 9 gebildet, durch die der Schraubenbolzen 11 hindurchsteckt. Der Schraubenbolzen 11 hat einen Schaft 12 und einen dickeren Kopf 13 an dem vom dem Flansch wegliegenden Ende. Der Schraubenbolzen 11 ist an der von dem zweiten Flansch 4 wegliegenden Seite des ersten Flansches 8 in einer Schrauböffnung eines Mutterorgans 14 geschraubt. Dieses Mutterorgan 14 ist in der allgemein bekannten und hier nicht näher gezeigten Weise schwenkbar und unverlierbar an dem ersten freien Ende des Schellenteils 1, oder an dessen erstem Flansch 8 befestigt. Aus dem Stand der Technik sind unzählige Ausführungen einer derartigen Befestigung bekannt.

Vorzugsweise ist die Befestigung des Mutterorgans 14 federnd ausgeführt und ist gewährleistet, daß der Bolzen 11 sich - in dem geöffneten Stand der Schelle - in seinem Verbindungsstand befindet, das heißt, im wesentlichen rechtwinklig auf dem ersten Flansch 8. Beim Schließen der Schelle stößt dann der zweite Flansch gegen den Kopf 13 des Bolzens 11, wodurch der Bolzen 11 - gegen die Federkraft der Befestigung - in einen Passierstand geschwenkt wird. In Figur 1 ist der Deutlichkeit halber der Schraubenbolzen 11 ein wenig weiter herausgeschwenkt gezeigt als der Passierstand. In dem Passierstand können die Schenkel 5 des zweiten Flansches 4 entlang dem Kopf 13 des Bolzens passieren. Unter dem Einfluß der Federkraft wird der Bolzen 11 dann wieder in den Verbindungsstand schwenken, sobald der Kopf 13 des Bolzens 11 die Schenkel 5 des zweiten Flansches 4 hintergreifen kann. Hierbei gelangt dann der Schaft 12 des Bolzens 11 in die Einführöffnung 7 zwischen den Enden der Schenkel 5 und von da an in den Schlitz 6. Wenn der Verbindungsstand erreicht ist, und der Kopf 13 die Schenkel 5 des Flansches hintergreift, kann der Schraubenbolzen 11 angezogen werden, um die Flansche 4, 8 zueinander zu ziehen und die Schelle zu schließen.

Der zweite Flansch 4 ist dadurch eine besondere Ausführung, daß die Schenkel 5 in der Nähe der Einführöffnung 7 durch ein Stegteil 18 miteinander verbunden sind. Um die obenbeschriebene Schwenkung der Verbindungseinheit aus dem Passierstand heraus in den Verbindungsstand zu ermöglichen, begrenzt dieses Stegteil 18 eine an den Schlitz 6 zwischen den Schenkeln 5 anschließende Öffnung 19, die ein zwischen dem Stegteil 18 und den Schenkeln 5 Passieren des Kopfes 13 des Bolzens 11 gestattet.

Das Stegteil 18 ist im wesentlichen U-förmig, wobei die nebeneinander liegenden Schenkel 20, 21 der U-Form sich im wesentlichen in der Verlängerung der Schenkel 5 des Flansches erstrecken.

In der in den Figuren 1 und 2a gezeigten Ausführung ist das Stegteil 18 ab der Fläche der Schenkel 5 in eine Richtung, die von dem ersten Flansch wegzeigt, gebogen. Hierbei liegt der Querschenkel 22 des Stegteils 18 an der von dem ersten Flansch abgekehrten Seite in einem Abstand zu der Fläche der Schenkel 5, wodurch die Öffnung eine Höhe "B" zu der Fläche der Schenkel 5 hat. Vorzugsweise ist diese Höhe "B" kleiner als die Höhe "A" des Bolzenkopfes 13, wie in Figur 2b gezeigt worden ist. Durch diese Maßnahme kann der Bolzenkopf 13 nicht unabsichtlich von den Schenkeln 5 weggleiten, bevor der Schraubenbolzen 11 angezogen ist. Zugleich werden die Schenkel 5 jetzt nicht von unter dem Bolzenkopf 13 wegschieben, wenn eine große Belastung auf die Schelle ausgeübt wird.

Die Abmessung "C" zwischen der Unterseite des Querschenkels 22 und den freien Rändern der Schenkel 5 in der Nähe der Einführöffnung 7 ist größer als die Höhe "A" des Bolzenkopfes 13.

Durch das Vorhandensein des Stegteils 18 wird das unerwünschte Auseinanderweichen der Schenkel 5, in solcher Weise, daß der Bolzenkopf 13 zwischendurch gelangen, in effektiver Weise verhindert.

Es ist denkbar, daß das Stegteil 18, anders als in Figur 2 gezeigt ist, in derselben Fläche als der zweite Flansch 4 liegt und also nicht gebogen ist. Dies hat jedoch den Nachteil, daß der Flansch 4 mit dem Stegteil 18 dann relativ weit aus dem Schellenkörper herausragt. Weiter ergibt die Tatsache, daß das Stegteil 18 zu der Fläche der Schenkel 5 in einen Winkel gestellt wird, eine zusätzliche Steifheit des zweiten Flansches 4.

In der Variante gemäß Figur 3 sind die gleichen Teile mit den gleichen Bezugsziffern wie in Figur 2 angedeutet. Der Unterschied ist, daß in in Figur 3 die Schenkel 5 jeweils an der Seite der Einführöffnung 7 eine in eine von dem ersten Flansch gezeigte Richtung schräg ausgerichtete Auflauffläche 24 aufweisen. Diese Auflaufflächen 24 stoßen beim Schließen der Schelle gegen den Kopf 13 des Bolzens 11 und drücken dann gegen den Kopf 13, so daß der Bolzen 11 in den Passierstand schwenkt.

Bei der obenbeschriebenen Schelle ist der Schraubenbolzen in der Fläche des Schellenkörpers schwenkbar zwischen einem herausgerichteten Stand und einem mehr entlang dem Schellenkörper liegenden Stand. Der Erfindungsgedanke ist jedoch auch mit Vorteil bei Schellen anwendbar, bei denen die Verbindungseinheit quer zu der Fläche des Schellenkörpers zwischen einem gegenüber dem Schellenkörper herausgerichteten Stand und einem mehr entlang dem Schellenkörper liegenden Stand schwenkbar ist, wie zum Beispiel aus der europäischen Anmeldung EP 0 671 579 bekannt ist.

## Patentansprüche

1. Schelle zum Befestigen eines Rohres oder dergleichen an einer Wand, Decke oder einer anderen Unterstützung, welche Schelle einen im wesentlichen ringförmigen Schellenkörper zum Umringen eines Rohres umfaßt, wobei der Schellenkörper eine von seinem ersten und seinem zweiten freien Ende begrenzte Öffnung aufweist, um den Schellenkörper um das Rohr herumzulegen, und wobei der Schellenkörper ein Zueinanderbewegen der freien Enden zum Schließen der Schelle gestattet, wobei weiter eine Verbindungseinheit zum lösbar Miteinanderverbinden der freien Enden vorgesehen ist, welche Verbindungseinheit ein Verbindungselement (11) und eine zu diesem zugehörige, beim ersten freien Ende des Schellenkörpers angeordnete Befestigung (8, 14) für das Verbindungselement umfaßt, welche Befestigung das Verbindungselement schwenkbar mit dem Schellenkörper verbindet,
wobei das Verbindungselement einen ab der Befestigung (8, 14) auf das zweite freie Ende ausgerichteten Schaft (12) umfaßt, der in einem Abstand zu der Befestigung (8, 14) mit einem Greiforgan (13) versehen ist,
wobei bei dem zweiten freien Ende des Schellenkörpers ein gegenüber dem ringförmigen Schellenkörper hinausgerichteter Auflageorgan (4) angeordnet ist, welches Auflageorgan nebeneinander liegende Schenkel (5) umfaßt, die zwischen ihnen einen Schlitz (6) mit an seiner von dem ringförmigen Schellenkörper abgekehrten Seite eine Einführöffnung (7) in solcher Weise begrenzen, daß der Schaft (12) des Verbindungselements (11) über die Einführöffnung (7) seitlich in den Schlitz (6) gelangen kann, während das Greiforgan (13) die Schenkel (5) des Auflageorgans (4) hintergreift,
wobei das Verbindungselement (11) gegenüber dem Schellenkörper zwischen einem Passierstand, in dem das Greiforgan (13) in einem solchen Abstand außerhalb des ringförmigen Teils des Schellenkörpers liegt, daß beim Zueinanderbewegen der freien Enden die Schenkel (5) des Auflageorgans (4) mit ihrer an der Einführöffnung (7) grenzenden Seite entlang dem Greiforgan (13) passieren können, und einem Verbindungsstand, in dem der Schaft (12) in dem Schlitz (6) liegt, und das Greiforgan (13) die Schenkel (5) des Auflageorgans (4) hintergreift, schwenken kann, **dadurch gekennzeichnet,** daß die Schenkel (5) des Auflageorgans (4) in der Nähe der Einführöffnung (7) des Schlitzes (6) über ein Stegteil (18) miteinander verbunden sind, wobei das Stegteil (18) eine an den Schlitz (6) zwischen den Schenkeln (5) anschließende öffnung (19) begrenzt, die ein zwischen dem Stegteil (18) und den Schenkeln (5) Passieren des Greiforgans (13) gestattet.

2. Schelle nach Anspruch 1, bei der das Stegteil (18) im wesentlichen U-förmig ist, wobei die nebeneinanderliegenden Schenkel (20, 21) der U-Form sich im wesentlichen in der Verlängerung der Schenkel (5) des Auflageorgans (4) erstrecken.

3. Schelle nach Anspruch 1 oder 2, bei der das Stegteil (18) einen Querkörper (22) umfaßt, der sich an der von dem ersten freien Ende (8) abgekehrten Seite in einem Abstand zu den Schenkeln (5) des Auflageorgans (4) erstreckt.

4. Schelle nach Anspruch 3, bei der der Abstand zwischen dem Querkörper (22) und der Fläche der Schenkel (5) geringer als die entsprechende Abmessung des Greiforgans (13) ist, insbesondere in solcher Weise, daß, wenn bei einer geschlossenen Schelle die Schenkel (5) die Neigung haben, von unter dem Greiforgan herauszuschieben, das Greiforgan (13) gegen den Querkörper (22) stößt.

5. Schelle nach einem oder mehreren der vorhergehenden Ansprüche, bei der zumindestens einer der Schenkel (5) an der Seite der Einführöffnung (7) eine in eine von dem ersten freien Ende abgekehrte Richtung hochstehende Auflauffläche (24) hat.

6. Schelle nach einem oder mehreren der vorhergehenden Ansprüche, bei der die Verbindungseinheit einen Schraubenbolzen (11) und ein zugehöriges Stützteil (14) umfaßt, wobei der Schraubenbolzen in das Stützteil geschraubt ist, welches Stützteil schwenkbar an dem ersten freien Ende des Schellenkörpers befestigt ist, und wobei der Schaft (12) des Schraubenbolzens den Griff bildet und der Kopf (13) der Schraubenbolzens das Greiforgan.

7. Schelle nach einem oder mehreren der vorhergehenden Ansprüche, bei der das Auflageorgan ein an dem zweiten freien Ende des Schellenkörpers herausgerichteter, gebogener zweiter Flansch (4) ist, der die Schenkel, den zwischen ihnen begrenzten Schlitz und das Stegteil bildet.
